# EUROPEAN PATENT APPLICATION

(11) **EP 3 299 600 A1**
(43) Date of publication of application: **28.03.2018**
(21) Application number: 17182812.2
(22) Date of filing: 24.07.2017
(51) Int. Cl.: F01P 3/14

(54) **INTERNAL-COMBUSTION ENGINE**

(30) Priority: 21.09.2016 JP 2016184253
(71) Applicant: Toyota Jidosha Kabushiki Kaisha, Toyota-shi, Aichi-ken, 471-8571 (JP)
(72) Inventor: AMANO, Takashi, Aichi-Ken, Aichi 471-8571 (JP); OGAWA, Teru, Aichi-Ken, Aichi 471-8571 (JP)
(74) Representative: D Young & Co LLP

(57) **Abstract**

An internal-combustion engine (1) has a combustion chamber (30) surrounded by a cylinder head (20), a cylinder liner (11), and a piston (15). The cylinder head (20) has a valve seat (25) adjacent to the combustion chamber (30). When viewed from a direction (Z) parallel to a central axis (C) of a cylindrical shape of the cylinder liner (11), the valve seat (25) is arranged at an outer side of a central region (CR) of the combustion chamber (30), the central region (CR) including the central axis (C). The valve seat (25) internally has a channel (40) for a cooling medium. Regarding a cross-sectional area of the channel (40) in a plane perpendicular to an extending direction of the channel (40), there are a first position (A) with a first cross-sectional area and a second position (B) with a second cross-sectional area larger than the first cross-sectional area. The second position (B) is closer to the central region (CR) than the first position (A) is.

## Description

### BACKGROUND

### Technical Field

The present invention relates to an internal-combustion engine having a valve seat.

### Background Art

One of measures against knocking in an internal-combustion engine is to cool a combustion chamber. Conventionally, a water jacket provided within a cylinder block and a cylinder head of the internal-combustion engine is known as a structure for cooling the combustion chamber.

Patent Literature 1 discloses a valve seat for use in an internal-combustion engine. A hollow space is formed within the valve seat. A cooling medium is supplied to the hollow space, and thereby the valve seat is cooled. By cooling the valve seat exposed to a high-temperature environment, it is possible to suppress high-temperature corrosion of the valve seat and thus prevent the valve seat from dropping off. It should be noted that Patent Literature 1 does not present a viewpoint of cooling a combustion chamber.

### List of Related Art

Patent Literature 1: Japanese Unexamined Utility Model Application Publication No. S58-111302

### SUMMARY

It is desired to further enhance cooling performance of cooling the combustion chamber. In order to enhance the cooling performance of the conventional water jacket, it is necessary to increase an output of a water pump, increase the number of water pumps, increase a size of a radiator, and so forth, which however causes increase in the size and weight of the internal-combustion engine and thus a vehicle.

An object of the present invention is to provide a new technique that can further enhance cooling performance of cooling the combustion chamber of the internal-combustion engine.

A first invention provides an internal-combustion engine.

The internal-combustion engine has a combustion chamber surrounded by a cylinder head, a cylinder liner, and a piston.

The cylinder head has a valve seat adjacent to the combustion chamber.

When viewed from a direction parallel to a central axis of a cylindrical shape of the cylinder liner, the valve seat is arranged at an outer side of a central region of the combustion chamber, the central region including the central axis.

The valve seat internally has a channel for a cooling medium.

Regarding a cross-sectional area of the channel in a plane perpendicular to an extending direction of the channel, there are a first position at which the cross-sectional area is a first cross-sectional area and a second position at which the cross-sectional area is a second cross-sectional area larger than the first cross-sectional area.

The second position is closer to the central region than the first position is.

A second invention further has the following features in addition to the first invention.

The valve seat further has:
an injection hole for injecting the cooling medium into the channel; and
a discharge hole for discharging the cooling medium from the channel.

The channel is annular, and includes an outer channel and an inner channel each extending from the injection hole to the discharge hole.

The outer channel passes through the first position.

The inner channel passes through the second position and is closer to the central region than the outer channel is.

A third invention further has the following features in addition to the second invention.

The cooling medium injected through the injection hole is distributed more to the inner channel than to the outer channel.

A fourth invention further has the following features in addition to any one of the first to third inventions.

The cross-sectional area of the channel increases as closer to the central region.

A fifth invention further has the following features in addition to any one of the first to third inventions.

When viewed from the direction parallel to the central axis, a peak position of a temperature distribution in the combustion chamber is included in the central region.

The cross-sectional area of the channel becomes maximum at a position closest to the peak position.

A sixth invention further has the following features in addition to any one of the first to third inventions.

When viewed from the direction parallel to the central axis, a spark plug of the cylinder head is positioned within the central region.

The cross-sectional area of the channel becomes maximum at a position closest to the spark plug.

A seventh invention further has the following features in addition to any one of the first to third inventions.

The cross-sectional area of the channel becomes maximum at a position closest to the central axis.

An eighth invention further has the following features in addition to any one of the first to seventh inventions.

The valve seat further has a heat radiating fin formed within the channel.

A ninth invention further has the following features in addition to the eighth invention.

A surface area of the heat radiating fin per unit volume is larger at the second position than at the first position.

A tenth invention further has the following features in addition to the eighth or the ninth invention.

A surface area of the heat radiating fin per unit volume increases as closer to the combustion chamber.

An eleventh invention further has the following features in addition to any one of the first to tenth inventions.

The channel is layered at least in a partial range.

A twelfth invention further has the following features in addition to any one of the first to eleventh inventions.

The number of the valve seat is plural.

Supply of the cooling medium is controlled independently for each of the plurality of valve seats.

A thirteenth invention further has the following features in addition to any one of the first to eleventh inventions.

The number of the valve seat is plural.

The plurality of valve seats include a first valve seat and a second valve seat.

The cylinder head further has a connection channel connecting between the channel of the first valve seat and the channel of the second valve seat.

The cooling medium introduced to the channel of one of the first valve seat and the second valve seat is supplied through the connection channel to the channel of another of the first valve seat and the second valve seat.

A fourteenth invention further has the following features in addition to the thirteenth invention.

Both the first valve seat and the second valve seat are intake valve seats on an intake side or exhaust valve seats on an exhaust side.

A fifteenth invention further has the following features in addition to the thirteenth invention.

The first valve seat is an intake valve seat on an intake side.

The second valve seat is an exhaust valve seat on an exhaust side.

A sixteenth invention further has the following features in addition to the fifteenth invention.

The cooling medium introduced to the channel of the intake valve seat is supplied through the connection channel to the channel of the exhaust valve seat.

A seventeenth invention further has the following features in addition to the fifteenth invention.

When warm-up of the intake side is required, the cooling medium introduced to the channel of the exhaust valve seat is supplied through the connection channel to the channel of the intake valve seat.

When warm-up of the intake side is not required, the cooling medium introduced to the channel of the intake valve seat is supplied through the connection channel to the channel of the exhaust valve seat.

According to the first invention, the valve seat has the channel for the cooling medium. It is therefore possible to utilize the valve seat as a new cooling means in addition to the conventional water jacket. As a result, total cooling performance for cooling the combustion chamber increases. In particular, the valve seat is adjacent to the combustion chamber and thus excellent in terms of an efficiency of cooling the combustion chamber. By utilizing the valve seat adjacent to the combustion chamber as a cooling means, it is possible to efficiently cool the combustion chamber.

Furthermore, according to the first invention, a section at which the cross-sectional area of the channel is large is positioned relatively close to the central region of the combustion chamber. A temperature of the central region of the combustion chamber tends to be higher than a temperature of an outer region of the combustion chamber. Meanwhile, a cooling capacity of the section at which the cross-sectional area of the channel is large is high. By arranging such the section having the high cooling capacity near the central region, it is possible to effectively cool the high-temperature central region.

According to the second and third inventions, the cooling medium is more likely to flow through the inner channel having the larger cross-sectional area than through the outer channel having the smaller cross-sectional area. In other words, the cooling medium injected through the injection hole is distributed more to the inner channel than to the outer channel. Therefore, even when a total amount of the cooling medium that can be supplied to the channel is constant, a relatively large amount of the cooling medium is preferentially distributed to the inner channel. As a result, the high-temperature central region can be cooled efficiently. Meanwhile, a small but certain amount of the cooling medium is supplied also to the outer channel, and thus the outer region of the combustion chamber also can be cooled. That is to say, with limited cooling resources, it is possible to achieve efficient cooling in accordance with the temperature distribution in the combustion chamber.

According to the fourth invention, the cross-sectional area of the channel increases as closer to the central region. In this case, it is possible to achieve cooling in accordance with the temperature distribution in the combustion chamber.

According to the fifth invention, the cross-sectional area of the channel becomes maximum at a position closest to the peak position of the temperature distribution. As a result, it is possible to achieve more efficient cooling in accordance with the actual temperature distribution in the combustion chamber.

According to the sixth invention, the cross-sectional area of the channel becomes maximum at a position closest to the spark plug. As a result, it is possible to effectively cool the spark plug together with the combustion chamber.

According to the seventh invention, the cross-sectional area of the channel becomes maximum at a position closest to the central axis. In this case, the arrangement of the valve seat is simple, which facilitates design and assembly of the internal-combustion engine.

According to the eighth to tenth inventions, the heat radiating fin is disposed within the channel. As a result, the cooling performance is further increased.

According to the eleventh invention, the channel is layered at least in a partial range. As a result, non-uniformity of flow lines and stagnation of the cooling medium can be suppressed. It is therefore possible to easily achieve an intended flow rate and to certainly cool intended sites.

According to the twelfth invention, the supply of the cooling medium is controlled independently for each of the plurality of valve seats, which enables finely-controlled cooling.

According to the thirteenth to sixteenth inventions, supplies of the cooling media to the first and second valve seats can be controlled collectively. It is thus possible to simplify a system for controlling the supplies of the cooling media.

According to the seventeenth invention, it is possible to promote increase in temperature of the intake side when warm-up of the intake side is required.

### BRIEF DESCRIPTION OF DRAWINGS

FIG. 1 is a cross-sectional diagram schematically showing a structural example of an internal-combustion engine according to a first embodiment of the present invention;
FIG. 2 is an enlarged sectional diagram of a valve and a valve seat in the first embodiment;
FIG. 3 is a plan view showing an example of an arrangement of a plurality of valve seats in the first embodiment;
FIG. 4 is a plan view for explaining features of the valve seat in the first embodiment;
FIG. 5 is a cross-sectional diagram showing a cross-sectional structure of the valve seat along a line P shown in FIG. 4;
FIG. 6 is a conceptual diagram for explaining supply of a cooling medium to a channel of the valve seat in the first embodiment;
FIG. 7 is a conceptual diagram for explaining supply of the cooling medium to the channel of the valve seat in the first embodiment;
FIG. 8 is a plan view for explaining one concrete example of the arrangement of the valve seat in the first embodiment;
FIG. 9 is a plan view for explaining another concrete example of the arrangement of the valve seat in the first embodiment;
FIG. 10 is a plan view for explaining features of a valve seat in a second embodiment of the present invention;
FIG. 11 is a cross-sectional diagram showing a cross-sectional structure of the valve seat along a line d-d shown in FIG. 10;
FIG. 12 is a plan view for explaining features of a valve seat in a third embodiment of the present invention;
FIG. 13 is a cross-sectional diagram showing a cross-sectional structure of the valve seat along a line d-d shown in FIG. 12;
FIG. 14 is a conceptual diagram for explaining control of supply of a cooling medium in a fourth embodiment of the present invention;
FIG. 15 is a conceptual diagram for explaining control of supply of a cooling medium in a fifth embodiment of the present invention;
FIG. 16 is a conceptual diagram for explaining flow of the cooling medium in a vicinity of a connection channel in the fifth embodiment;
FIG. 17 is a conceptual diagram for explaining flow of the cooling medium in a vicinity of the connection channel in the fifth embodiment;
FIG. 18 is a conceptual diagram for explaining control of supply of a cooling medium in a sixth embodiment of the present invention;
FIG. 19 is a conceptual diagram for explaining control of supply of a cooling medium in a seventh embodiment of the present invention; and
FIG. 20 is a flow chart for explaining the control of supply of the cooling medium in the seventh embodiment.

### EMBODIMENTS

Embodiments of the present invention will be described below with reference to the attached drawings.

### <First Embodiment>

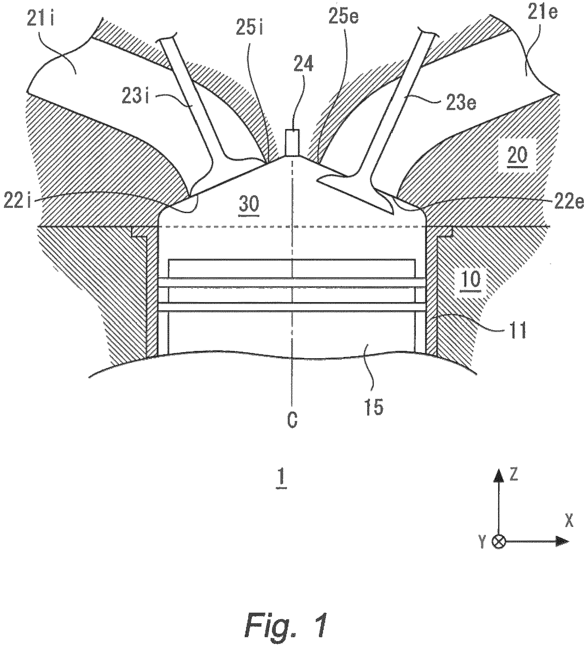

FIG. 1 is a cross-sectional diagram schematically showing a structural example of an internal-combustion engine 1 according to a first embodiment of the present invention. The internal-combustion engine 1 is provided with a cylinder block 10, a cylinder head 20, and a combustion chamber 30 as major components.

The cylinder block 10 includes a cylindrical cylinder liner 11 that forms a side wall of the combustion chamber 30. A central axis of the cylindrical shape of the cylinder liner 11 is hereinafter referred to as a "central axis C". In addition, in the following description, a direction parallel to the central axis C is referred to as a "Z-direction", and a plane perpendicular to the Z-direction is referred to as an "XY plane".

In the cylinder liner 11, a piston 15 is provided so as to be slidable in the Z-direction along an inner peripheral surface of the cylinder liner 11. The piston 15 forms a bottom surface of the combustion chamber 30.

The cylinder head 20 is placed on the cylinder block 10 so as to face the piston 15 and forms an upper surface of the combustion chamber 30. That is, the combustion chamber 30 is surrounded by the cylinder liner 11, the piston 15, and the cylinder head 20.

The cylinder head 20 is provided with an intake passage 21i, an exhaust passage 21e, an intake valve 23i, an exhaust valve 23e, a spark plug 24, an intake valve seat 25i, and an exhaust valve seat 25e. The intake passage 21i is connected to the combustion chamber 30 at an intake side opening 22i. The intake valve 23i is provided to be capable of opening/closing the intake side opening 22i. The exhaust passage 21e is connected to the combustion chamber 30 at an exhaust side opening 22e. The exhaust valve 23e is provided to be capable of opening/closing the exhaust side opening 22e. The spark plug 24 is installed, for example, in a region sandwiched by the intake side opening 22i and the exhaust side opening 22e.

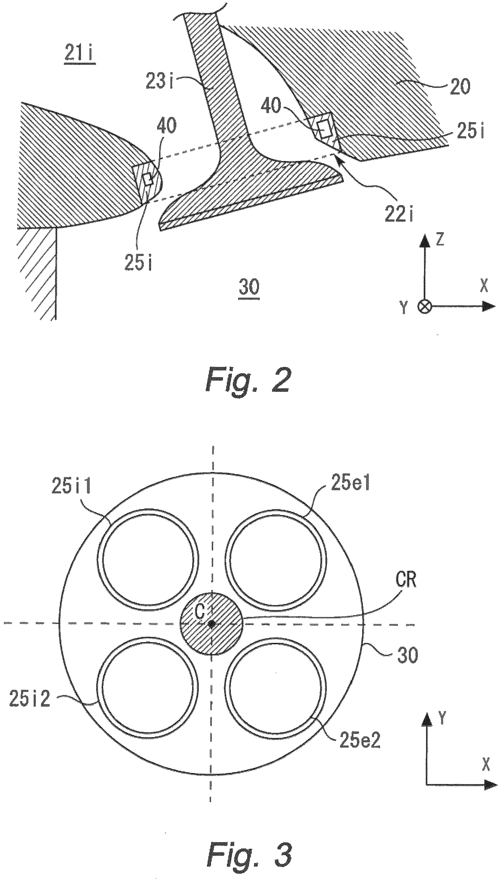

FIG. 2 is an enlarged sectional diagram of the intake valve 23i and the intake valve seat 25i on the intake side. The intake valve seat 25i is an annular part secured to periphery of the intake side opening 22i and is adjacent to the combustion chamber 30. The intake valve 23i rests against the intake valve seat 25i. That is, when the intake valve 23i closes the intake side opening 22i, the intake valve 23i comes in contact with the intake valve seat 25i. As a result, supply of intake gas from the intake passage 21i to the combustion chamber 30 is interrupted.

The same applies to the exhaust side whose enlarged sectional diagram is not shown. The exhaust valve seat 25e is an annular part secured to periphery of the exhaust side opening 22e and is adjacent to the combustion chamber 30. The exhaust valve 23e rests against the exhaust valve seat 25e. That is, when the exhaust valve 23e closes the exhaust side opening 22e, the exhaust valve 23e comes in contact with the exhaust valve seat 25e. As a result, discharge of exhaust gas from the combustion chamber 30 to the exhaust passage 21e is interrupted.

In the following description, when there is no need to distinguish between the intake valve seat 25i and the exhaust valve seat 25e, they may be collectively called a "valve seat 25".

FIG. 3 is an XY plan view showing an example of an arrangement of a plurality of valve seats 25 when viewed from the Z-direction. Shown in the present example is a case of 4-valve type where two intake valves 23i and two exhaust valves 23e are provided for a single combustion chamber 30 (however, the valve type is not limited to that). Two intake valve seats 25i1 and 25i2 are provided for the two intake valves 23i, respectively. Moreover, two exhaust valve seats 25e1 and 25e2 are provided for the two exhaust valves 23e.

As shown in FIG. 3, the plurality of valve seats 25 (i.e. 25i1 25i2, 25e1, and 25e2) are arranged around the central axis C. Here, let us consider a "central region CR" of the combustion chamber 30 as shown in FIG. 3. The central region CR is a region including the central axis C and surrounded by the plurality of valve seats 25. That is, each of the plurality of valve seats 25 is arranged at a radially outer side of the central region CR, when considering the central axis C as a center. In other words, the central region CR is positioned at a radially inner side of the position of each valve seat 25.

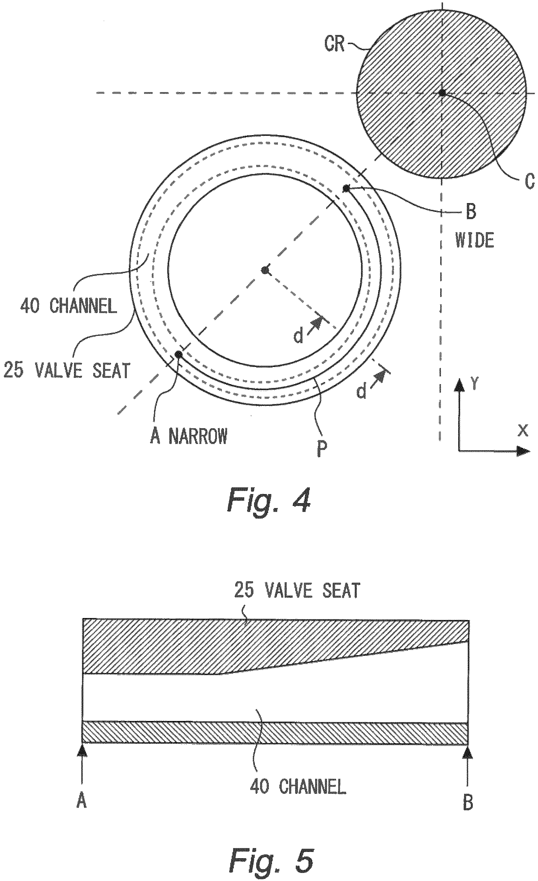

FIG. 4 is an XY plan view for explaining features of the valve seat 25 in the present embodiment. FIG. 4 shows one valve seat 25 and the central region CR when viewed from the Z-direction as in the case of FIG. 3. The valve seat 25 according to the present embodiment internally has a channel 40 (hollow portion) through which a cooling medium flows. More specifically, the channel 40 is formed within the annular valve seat 25 so as to extend in a circumferential direction of the annular shape. That is, the channel 40 also is formed to be annular. Note however that the channel 40 may not necessarily be annular, but may be partially annular.

Here, let us consider a cross-sectional area of the channel 40 in a plane perpendicular to the extending direction of the channel 40. The cross-sectional area corresponds to an area of cross-section along a line d-d in FIG. 4. The line d-d is parallel to a radial direction of the annular shape of the valve seat 25. In the present embodiment, the cross-sectional area of the channel 40 is not uniform. The valve seat 25 includes both a large section and a small section in terms of the cross-sectional area of the channel 40.

For example, let us consider two positions A and B as shown in FIG. 4. The first position A is relatively far from the central region CR, while the second position B is relatively close to the central region CR. In other words, the second position B is closer to the central region CR than the first position A is. The cross-sectional area (i.e. second cross-sectional area) of the channel 40 at the second position B is larger than the cross-sectional area (i.e. first cross-sectional area) of the channel 40 at the first position A. For example, in the XY plane shown in FIG. 4, a width of the channel 40 at the second position B is larger than a width of the channel 40 at the first position A. The width of the channel 40 may become larger as closer to the central region CR.

FIG. 5 shows a cross-sectional structure of the valve seat 25 along a line P in FIG. 4. The line P connects between the first position A and the second position B along the channel 40. As shown in FIG. 5, a thickness of the channel 40 at the second position B is larger than a thickness of the channel 40 at the first position A. The thickness of the channel 40 may become larger as closer to the central region CR.

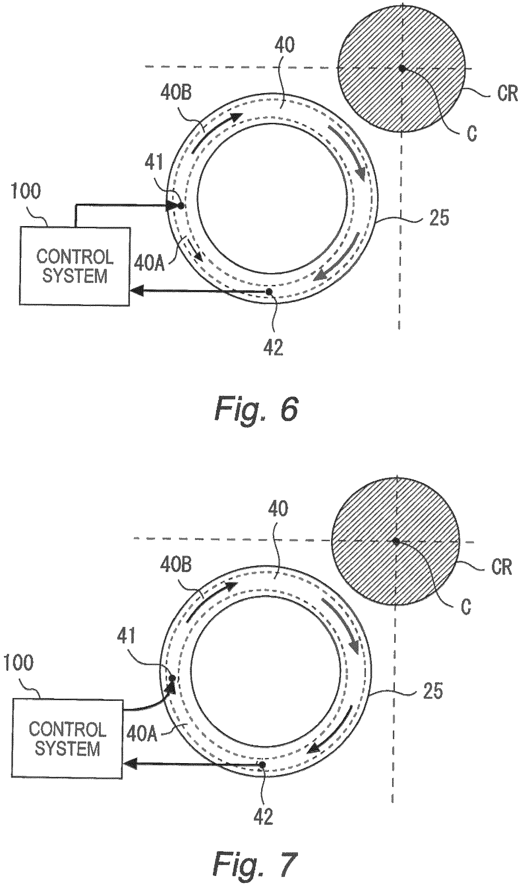

FIG. 6 is a conceptual diagram for explaining supply of the cooling medium to the channel 40. The cooling medium is water, for example. The valve seat 25 has an injection hole 41 for injecting the cooling medium into the channel 40 and a discharge hole 42 for discharging the cooling medium from the channel 40. Moreover, the internal-combustion engine 1 includes a control system 100 that controls circulation of the cooling medium. The control system 100 injects the cooling medium into the channel 40 through the injection hole 41 and receives the cooling medium discharged from the channel 40 through the discharge hole 42. For example, an existing water jacket control system may be also used as such the control system 100. Alternatively, the control system 100 may be provided separately from the water jacket control system.

By supplying the cooling medium to the channel 40 of the valve seat 25, it is possible to cool the valve seat 25 and its surroundings. That is, the valve seat 25 itself can be utilized as a cooling means. Since the valve seat 25 is adjacent to the combustion chamber 30, it can be said that the valve seat 25 is excellent in terms of an efficiency of cooling the combustion chamber 30. Thus, by utilizing the valve seat 25 adjacent to the combustion chamber 30 as a cooling means, it is possible to efficiently cool the combustion chamber 30.

Moreover, the section at which the cross-sectional area of the channel 40 is large is positioned relatively close to the central region CR of the combustion chamber 30. A temperature of the central region CR of the combustion chamber 30 tends to be higher than a temperature of the outer region closer to the cylinder liner 11. Meanwhile, as the cross-sectional area of the channel 40 becomes larger, a surface area per unit length along the channel 40 becomes larger and thus heat can be absorbed more efficiently. That is to say, a cooling capacity of the section at which the cross-sectional area of the channel 40 is large is high. By arranging such the section having the high cooling capacity near the central region CR, it is possible to effectively cool the high-temperature central region CR.

The cross-sectional area of the channel 40 may increase as closer to the central region CR. In this case, it is possible to achieve cooling in accordance with the temperature distribution in the combustion chamber 30.

Furthermore, according to the present embodiment, it is possible to distribute more cooling medium to the channel 40 closer to the central region CR, even when a total amount of the cooling medium is constant. More specifically, as shown in FIG. 6, the annular channel 40 includes two channels extending from the injection hole 41 to the discharge hole 42: an outer channel 40A and an inner channel 40B. The outer channel 40A is the channel 40 passing through the above-mentioned first position A (see FIG. 4) at which the cross-sectional area is smaller, and is positioned relatively far from the central region CR. On the other hand, the inner channel 40B is the channel 40 passing through the above-mentioned second position B (see FIG. 4) at which the cross-sectional area is larger, and is positioned relatively close to the central region CR. In this case, the cooling medium is more likely to flow through the inner channel 40B having the larger cross-sectional area than through the outer channel 40A having the smaller cross-sectional area. In other words, the cooling medium injected through the injection hole 41 is distributed more to the inner channel 40B than to the outer channel 40A. Therefore, even when a total amount of the cooling medium that can be supplied to the channel 40 is constant, a relatively large amount of the cooling medium is preferentially distributed to the inner channel 40B. As a result, the high-temperature central region CR can be cooled efficiently. Meanwhile, a small but certain amount of the cooling medium is supplied also to the outer channel 40A, and thus the outer region of the combustion chamber 30 also can be cooled. That is, according to the present embodiment, with limited cooling resources, it is possible to achieve efficient cooling in accordance with the temperature distribution in the combustion chamber 30.

An injection direction of the cooling medium and a discharge direction of the cooling medium may be designed such that the cooling medium is more likely to flow through the inner channel 40B than through the outer channel 40A. For example, as shown in FIG. 7, the injection hole 41 may be formed such that the injection direction of the cooling medium is not toward the outer channel 40A but toward the inner channel 40B.

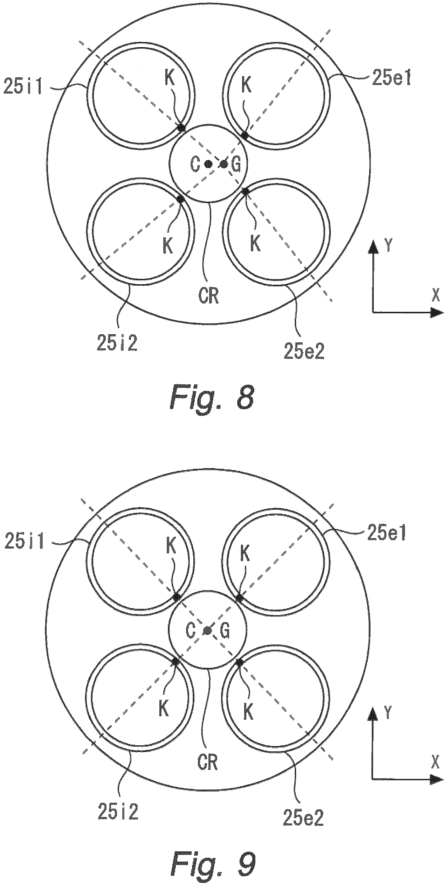

Next, a concrete example of the arrangement of the valve seat 25 will be described with reference to FIG. 8. FIG. 8 shows the plurality of valve seats 25 (i.e. 25i1, 25i2, 25e1, and 25e2) and the central region CR when viewed from the Z-direction as in the case of FIG. 3. In the present example, let us consider a "representative point G" included in the central region CR. In each valve seat 25, a position closest to the representative point G is denoted by a reference numeral "K". In this case, each valve seat 25 is arranged such that the cross-sectional area of the channel 40 becomes maximum at the closest position K. The cross-sectional area of the channel 40 may increase as closer to the closest position K.

A variety of examples can be considered as setting of the representative point G. As one example, a peak position of the temperature distribution in the combustion chamber 30 is set as the representative point G. The peak position is not necessarily at the same position as the central axis C, but typically deviates a little from the central axis C to the exhaust side. The peak position of the temperature distribution can be obtained in advance through an experiment or a simulation. When such the peak position is set as the representative point G, the cross-sectional area of the channel 40 becomes maximum at the position K closest to the peak position. As a result, it is possible to achieve more efficient cooling in accordance with the actual temperature distribution in the combustion chamber 30.

As another example, the central axis C is set as the representative point G as shown in FIG. 9. In this case, each valve seat 25 is arranged such that the cross-sectional area of the channel 40 becomes maximum at the position K closest to the central axis C. Such the arrangement is simple and thus preferable in terms of easiness of design and assembly of the internal-combustion engine 1.

As still another example, the installation position of the spark plug 24 may be taken into consideration. The spark plug 24 is a part exposed to a high-temperature gas in the combustion chamber 30 and thus its temperature is likely to increase. In order to prevent malfunction of the spark plug 24 due to the high-temperature, it is desirable to cool the spark plug 24. When the spark plug 24 is installed in a region sandwiched by the intake side opening 22i and the exhaust side opening 22e as shown in FIG. 1, the spark plug 24 is positioned within the central region CR in the XY plane. Therefore, by utilizing the valve seat 25 according to the present embodiment as a cooling means, it is possible to effectively cool not only the combustion chamber 30 but also the spark plug 24. In particular, when the position of the spark plug 24 is set as the representative point G, the cross-sectional area of the channel 40 becomes maximum at the position K closest to the spark plug 24. As a result, it is possible to further effectively cool the spark plug 24.

It should be noted that as long as the representative point G is included in the central region CR, the tendency of the present embodiment that "the section at which the cross-sectional area of the channel 40 is large is positioned relatively close to the central region CR" remains.

The valve seat 25 according to the present embodiment can be fabricated by using a 3D printer, for example. Alternatively, the valve seat 25 may be fabricated by joining two parts facing across the channel 40.

According to the present embodiment, as described above, the valve seat 25 has the channel 40 for the cooling medium. It is therefore possible to utilize the valve seat 25 as a new cooling means in addition to the conventional water jacket. As a result, total cooling performance for cooling the combustion chamber 30 increases. In particular, the valve seat 25 is adjacent to the combustion chamber 30 and thus excellent in terms of the efficiency of cooling the combustion chamber 30. By utilizing the valve seat 25 adjacent to the combustion chamber 30 as a cooling means, it is possible to efficiently cool the combustion chamber 30.

Note here that, according to the present embodiment, there is no need to enhance the cooling performance of the conventional water jacket in order to enhance the total cooling performance. In order to enhance the cooling performance of the conventional water jacket, it is necessary to increase an output of a water pump, increase the number of water pumps, increase a size of a radiator, and so forth, which however causes increase in the size and weight of the internal-combustion engine 1 and thus a vehicle. According to the present embodiment, it is possible to enhance the cooling performance without creating such the problems.

Moreover, according to the present embodiment, the section at which the cross-sectional area of the channel 40 is large is positioned relatively close to the central region CR of the combustion chamber 30. The temperature of the central region CR of the combustion chamber 30 tends to be higher than the temperature of the outer region of the combustion chamber 30. Meanwhile, the cooling capacity of the section at which the cross-sectional area of the channel 40 is large is high. By arranging such the section having the high cooling capacity near the central region CR, it is possible to effectively cool the high-temperature central region CR. The cross-sectional area of the channel 40 may increase as closer to the central region CR. In this case, it is possible to achieve cooling in accordance with the temperature distribution in the combustion chamber 30.

Furthermore, according to the present embodiment, the cooling medium is more likely to flow through the inner channel 40B having the larger cross-sectional area than through the outer channel 40A having the smaller cross-sectional area. In other words, the cooling medium injected through the injection hole 41 is distributed more to the inner channel 40B than to the outer channel 40A. Therefore, even when a total amount of the cooling medium that can be supplied to the channel 40 is constant, a relatively large amount of the cooling medium is preferentially distributed to the inner channel 40B. As a result, the high-temperature central region CR can be cooled efficiently. Meanwhile, a small but certain amount of the cooling medium is supplied also to the outer channel 40A, and thus the outer region of the combustion chamber 30 also can be cooled. That is to say, according to the present embodiment, with limited cooling resources, it is possible to achieve efficient cooling in accordance with the temperature distribution in the combustion chamber 30.

It should be noted that the effects of the present embodiment can be obtained as long as at least one valve seat 25 has the channel 40. Of course, the effects become more remarkable as the number of the valve seats 25 having the channel 40 increases. Preferably, every valve seat 25 has the channel 40.

### <Second Embodiment>

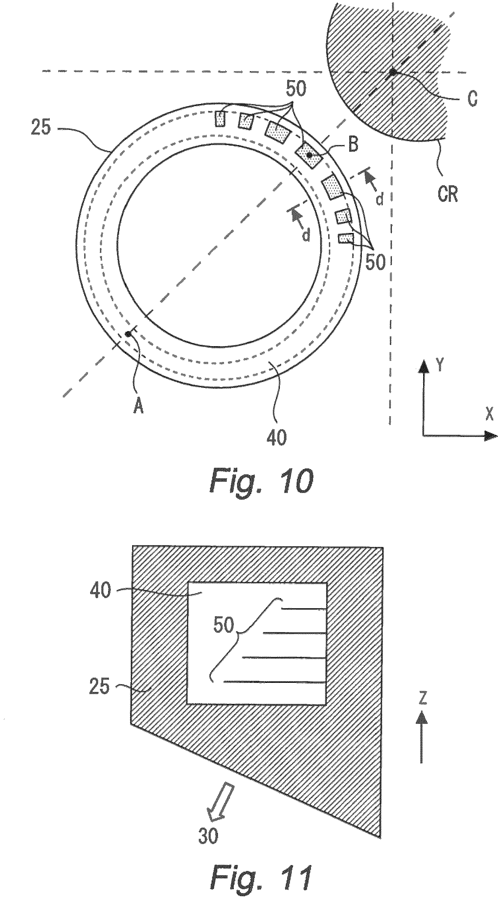

FIG. 10 is an XY plan view for explaining features of the valve seat 25 in a second embodiment of the present invention. A format of FIG. 10 is the same as that of the foregoing FIG. 4. An overlapping description with the first embodiment will be omitted as appropriate.

The valve seat 25 according to the present embodiment has a heat radiating fin 50. The heat radiating fin 50 is formed so as to extend from a side wall of the channel 40 to within the channel 40. For example, the heat radiating fin 50 can be formed integrally with the main body of the valve seat 25 by using a 3D printer. Since the heat radiating fin 50 is disposed within the channel 40, the cooling performance is further increased.

In the example shown in FIG. 10, the heat radiating fin 50 is predominantly disposed in a region close to the central region CR. As a result, the high-temperature central region CR can be cooled effectively. To make further generalization, a capacity of the heat radiating fin 50 depends on a surface area of the heat radiating fin 50 per unit volume, and increases as the surface area becomes larger. It is therefore preferable that the surface area at the second position B relatively close to the central region CR is larger than the surface area at the first position A relatively far from the central region CR. This means that the surface area of the heat radiating fin 50 per unit volume has the same tendency as that of the cross-sectional area of the channel 40. By increasing the capacity of the heat radiating fin 50 at the second position B close to the central region CR, it is possible to effectively cool the high-temperature central region CR.

The capacity of the heat radiating fin 50 may increase as closer to the central region CR. In the example shown in FIG. 10, a plurality of heat radiating fins 50 are disposed, and a width of the heat radiating fin 50 becomes larger as closer to the central region CR. As a result, it is possible to achieve cooling in accordance with the temperature distribution in the combustion chamber 30.

FIG. 11 shows a cross-sectional structure of the valve seat 25 along a line d-d shown in FIG. 10. In the example shown in FIG. 11, a plurality of heat radiating fins 50 are disposed, and a width of the heat radiating fin 50 becomes larger as closer to the combustion chamber 30. That is, the surface area of the heat radiating fin 50 per unit volume increases as closer to the combustion chamber 30. As a result, it is possible to further effectively cool the side of the high-temperature combustion chamber 30.

### <Third Embodiment>

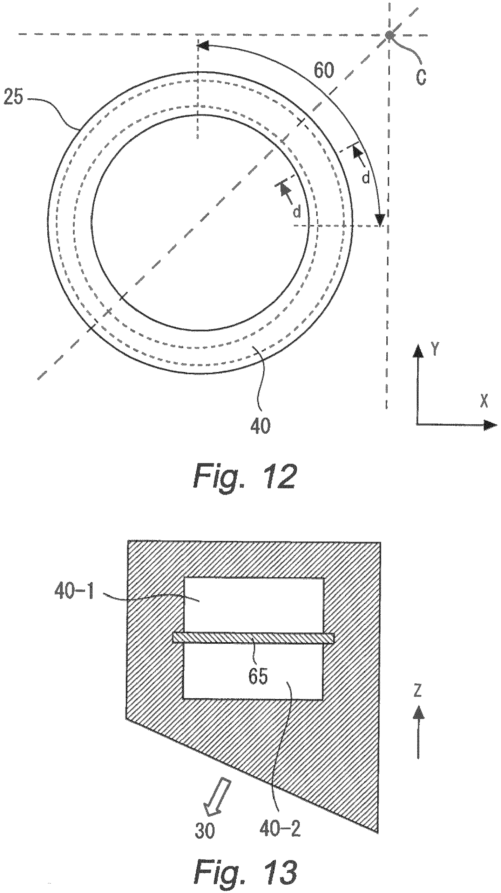

FIG. 12 is an XY plan view for explaining features of the valve seat 25 in a third embodiment of the present invention. A format of FIG. 12 is the same as that of the foregoing FIG. 4. FIG. 13 shows a cross-sectional structure of the valve seat 25 along a line d-d shown in FIG. 12. An overlapping description with the first embodiment will be omitted as appropriate.

According to the present embodiment, the channel 40 is layered at least in a partial range 60. In the example shown in FIG. 13, a partition 65 is disposed within the channel 40, and thereby the channel 40 is divided into a first channel layer 40-1 and a second channel layer 40-2. It should be noted that the number of channel layers is not limited to 2. Respective thicknesses of the channel layers are not necessarily the same.

When the cross-sectional area of the channel 40 is large, both a position where the cooling medium easily flows and a position where the cooling medium does not easily flow may occur in the large cross-section. For example, a flow of the cooling medium may occur mainly in an upper part of the channel 40 and stagnate in a lower part of the channel 40. However, when the channel 40 is layered, the flow (flow line) occurs in each channel layer. Therefore, non-uniformity of the flow lines and stagnation of the cooling medium are suppressed as compared with a case where the channel 40 is not layered. Since non-uniformity of the flow lines and stagnation are suppressed, it is possible to easily achieve an intended flow rate and to certainly cool intended sites. In this regard, it is preferable that the range 60 in which the channel 40 is layered includes at least a section close to the central region CR.

Moreover, when there are a plurality of channel layers, even if one of them is clogged, another channel layer is still available. It is thus possible to continue the cooling.

### <Fourth Embodiment>

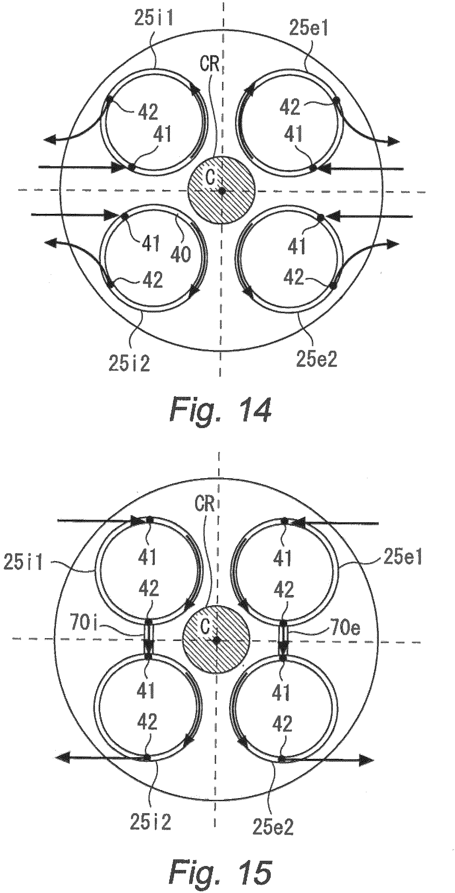

FIG. 14 is a conceptual diagram for explaining control of supply of the cooling medium in a fourth embodiment of the present invention. A format of FIG. 14 is the same as that of the foregoing FIG. 3. An overlapping description with the first embodiment will be omitted as appropriate.

According to the present embodiment, the supply of the cooling medium is controlled independently for each of the plurality of valve seats 25 (i.e. 25i1, 25i2, 25e1, and 25e2). As a result, it is possible to independently manage respective temperatures of the plurality of valve seats 25 and to achieve finely-controlled cooling.

### <Fifth Embodiment>

FIG. 15 is a conceptual diagram for explaining control of supply of the cooling medium in a fifth embodiment of the present invention. A format of FIG. 15 is the same as that of the foregoing FIG. 3. An overlapping description with the first embodiment will be omitted as appropriate.

According to the present embodiment, the supplies of the cooling media to two or more valve seats 25 are controlled collectively. Respective channels 40 of the two or more valve seats 25 to be collectively controlled are connected in series through a connection channel 70. The connection channel 70 is formed in the cylinder head 20.

In the example shown in FIG. 15, respective channels 40 of two intake valve seats 25i1 and 25i2 on the intake side are connected with each other through a connection channel 70i. The cooling medium introduced to the channel 40 of one of the intake valve seats 25i1 and 25i2 is supplied through the connection channel 70i to the channel 40 of the other of the intake valve seats 25i1 and 25i2. Since the supply of the cooling medium to the intake side can be controlled collectively, it is possible to simplify the control system 100.

Similarly, respective channels 40 of two exhaust valve seats 25e1 and 25e2 on the exhaust side are connected with each other through a connection channel 70e. The cooling medium introduced to the channel 40 of one of the exhaust valve seats 25e1 and 25e2 is supplied through the connection channel 70e to the channel 40 of the other of the exhaust valve seats 25e1 and 25e2. Since the supply of the cooling medium to the exhaust side can be controlled collectively, it is possible to simplify the control system 100.

Moreover, as shown in FIG. 15, the connection channels 70i and 70e as well as the plurality of valve seats 25 surround the central region CR. Therefore, the cooling media flowing through the connection channels 70i and 70e also contribute to the cooling of the central region CR. In this regard, it is preferable that the connection channels 70i and 70e are formed as close to the central region CR as possible.

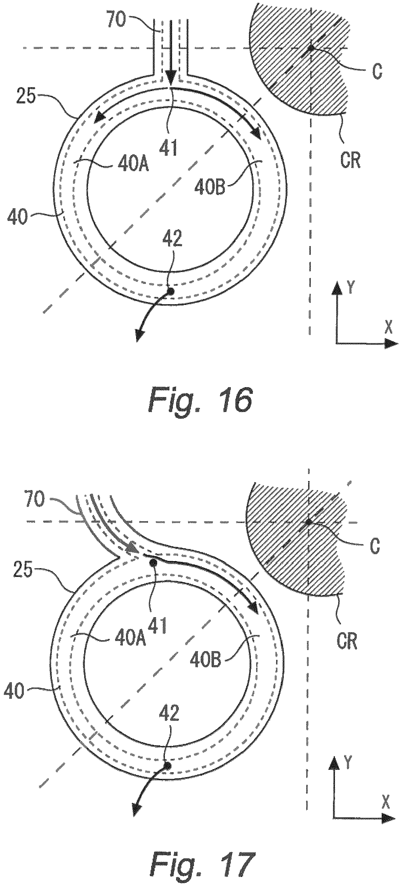

FIG. 16 is a conceptual diagram for explaining flow of the cooling medium in a vicinity of the connection channel connection channel 70. The connection channel 70 represents any of the connection channels 70i and 70e. The valve seat 25 whose injection hole 41 is connected to the connection channel 70 is shown in FIG. 16. As described in the first embodiment, there are two channels extending from the injection hole 41 to the discharge hole 42: the outer channel 40A and the inner channel 40B. The cooling medium is more likely to flow through the inner channel 40B having the larger cross-sectional area than through the outer channel 40A having the smaller cross-sectional area. In other words, the cooling medium injected from the connection channel 70 is distributed more to the inner channel 40B than to the outer channel 40A. As a result, the high-temperature central region CR can be cooled efficiently.

The connection channel 70 may be designed such that the cooling medium is more likely to flow through the inner channel 40B than through the outer channel 40A. For example, as shown in FIG. 17, the connection channel 70 may be formed such that the injection direction of the cooling medium is not toward the outer channel 40A but toward the inner channel 40B. The same applies to the side of discharging the cooling medium from the channel 40 to the connection channel 70.

### <Sixth Embodiment>

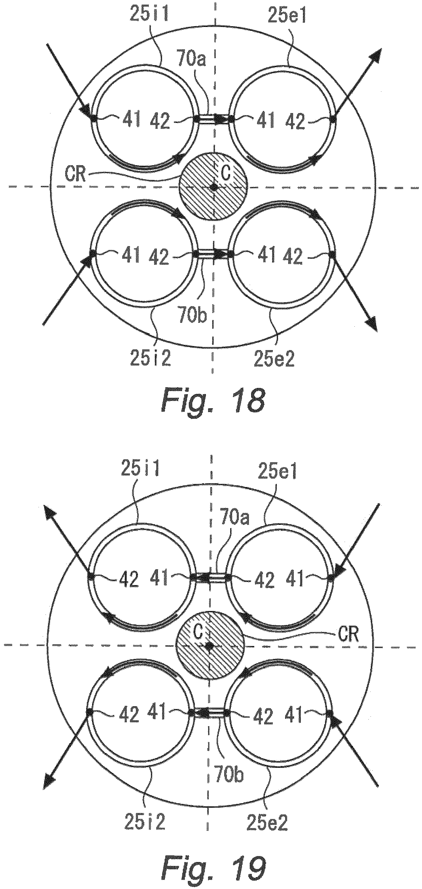

FIG. 18 is a conceptual diagram for explaining control of supply of the cooling medium in a sixth embodiment of the present invention. A format of FIG. 18 is the same as that of the foregoing FIG. 3. An overlapping description with the first embodiment will be omitted as appropriate.

According to the present embodiment, the supplies of the cooling media to two or more valve seats 25 are controlled collectively, as in the case of the fifth embodiment described above. In the present embodiment, the supplies of the cooling media to the intake valve seat 25i and the exhaust valve seat 25e are controlled collectively.

In the example shown in FIG. 18, respective channels 40 of the intake valve seat 25i1 and the exhaust valve seat 25e1 are connected with each other through a connection channel 70a. Here, from a viewpoint of a cooling efficiency, it is preferable to make the cooling medium flow from the intake side of a relatively low temperature to the exhaust side of a relatively high temperature. To that end, as shown in FIG. 18, the cooling medium introduced to the channel 40 of the intake valve seat 25i1 is supplied through the connection channel 70a to the channel 40 of the exhaust valve seat 25e1. Similarly, respective channels 40 of the intake valve seat 25i2 and the exhaust valve seat 25e2 are connected with each other through a connection channel 70b. The cooling medium introduced to the channel 40 of the intake valve seat 25i2 is supplied through the connection channel 70b to the channel 40 of the exhaust valve seat 25e2.

As in the case of the fifth embodiment described above, the collective control makes it possible to simplify the control system 100 according to the present embodiment. It is preferable that the connection channels 70a and 70b are formed as close to the central region CR as possible. Moreover, the features described in FIGS. 16 and 17 can be applied also to the present embodiment.

### <Seventh Embodiment>

A seventh embodiment of the present invention is a modification of the sixth embodiment described above. According to the present embodiment, a flow direction of the cooling medium is switched depending on an operating condition of the internal-combustion engine 1.

For example, let us consider a cold start of the internal-combustion engine 1. There is a requirement to warm up the intake side being slow in warm-up for a while after the cold start. In this case, by making the cooling medium flow from the exhaust side of a relatively high temperature to the intake side of a relatively low temperature, it is possible to promote increase in the temperature of the intake side. To that end, as shown in FIG. 19, the flow direction of the cooling medium is set to be opposite to that in the case of FIG. 18 for a while after the cold start. That is, the cooling medium introduced to the channel 40 of the exhaust valve seat 25e1 (25e2) is supplied through the connection channel 70a (70b) to the channel 40 of the intake valve seat 25i1 (25i2). After the warm-up of the intake side is completed, the flow direction of the cooling medium is switched to the state shown in FIG. 18.

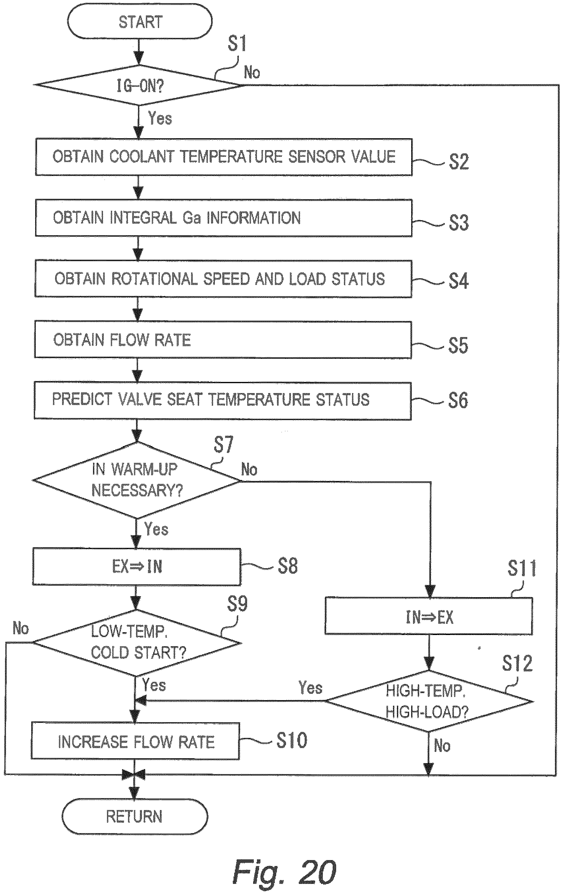

FIG. 20 is a flow chart for explaining the control of supply of the cooling medium in the present embodiment. The flow shown in FIG. 20 is executed repeatedly.

After the internal-combustion engine 1 is started (Step S1; Yes), a variety of parameters indicating the operating condition of the internal-combustion engine 1 are obtained through a variety of sensors (Steps S2, S3, S4, and S5). The variety of parameters include a coolant temperature, an integration value of a fresh air flow rate (Ga), an engine rotational speed, an engine load, a flow rate of the cooling medium, and so on.

Next, a temperature status of the valve seat 25 is predicted based on the parameters obtained at Steps S2 to S5 (Step S6). For example, a map indicating a correspondence relationship between the parameters and the temperature status of the valve seat 25 is prepared in advance. The temperature status of the valve seat 25 can be predicted by referring to the map.

Next, whether or not the warm-up of the intake side is necessary is determined based on the temperature status of the valve seat 25. For example, if the predicted temperature of the valve seat 25 is lower than a threshold value, it is determined that the warm-up of the intake side is necessary.

When the warm-up of the intake side is required (Step S7; Yes), the flow direction of the cooling medium is set to the state shown in FIG. 19 (Step S8). As a result, increase in the temperature of the intake side can be promoted. In particular, during a low-temperature cold start (Step S9; Yes), the flow rate of the cooling medium may be controlled to increase (Step S10).

On the other hand, when the warm-up of the intake side is not required (Step S7; No), the flow direction of the cooling medium is set to the state show in FIG. 18 (Step S11). During a high-temperature high-load operation (Step S12; Yes), the flow rate of the cooling medium may be controlled to increase (Step S10).

### <Eighth Embodiment>

It is also possible to combine some of the first to seventh embodiments described above with each other in so far as they are not contradictory to each other.

## Claims

1. An internal-combustion engine (1) comprising a combustion chamber (30) surrounded by a cylinder head (20), a cylinder liner (11), and a piston (15),
the cylinder head (20) comprising a valve seat (25) adjacent to the combustion chamber (30),
wherein when viewed from a direction (Z) parallel to a central axis (C) of a cylindrical shape of the cylinder liner (11), the valve seat (25) is arranged at an outer side of a central region (CR) of the combustion chamber (30), the central region (CR) including the central axis (C),
wherein the valve seat (25) internally comprises a channel (40) for a cooling medium,
wherein regarding a cross-sectional area of the channel (40) in a plane perpendicular to an extending direction of the channel (40), there are a first position (A) at which the cross-sectional area is a first cross-sectional area and a second position (B) at which the cross-sectional area is a second cross-sectional area larger than the first cross-sectional area, and
wherein the second position (B) is closer to the central region (CR) than the first position (A) is.

2. The internal-combustion engine (1) according to claim 1,
wherein the valve seat (25) further comprises:
an injection hole (41) for injecting the cooling medium into the channel (40); and
a discharge hole (42) for discharging the cooling medium from the channel (40),
wherein the channel (40) is annular, and includes an outer channel (40A) and an inner channel (40B) each extending from the injection hole (41) to the discharge hole (42),
the outer channel (40A) passes through the first position (A), and
the inner channel (40B) passes through the second position (B) and is closer to the central region (CR) than the outer channel (40A) is.

3. The internal-combustion engine (1) according to claim 2,
wherein the cooling medium injected through the injection hole (41) is distributed more to the inner channel (40B) than to the outer channel (40A).

4. The internal-combustion engine (1) according to any one of claims 1 to 3,
wherein the cross-sectional area increases as closer to the central region (CR).

5. The internal-combustion engine (1) according to any one of claims 1 to 3,
wherein when viewed from the direction (Z) parallel to the central axis (C), a peak position of a temperature distribution in the combustion chamber (30) is included in the central region (CR), and
wherein the cross-sectional area becomes maximum at a position (K) closest to the peak position.

6. The internal-combustion engine (1) according to any one of claims 1 to 3,
wherein when viewed from the direction (Z) parallel to the central axis (C), a spark plug (24) of the cylinder head (20) is positioned within the central region (CR), and
wherein the cross-sectional area becomes maximum at a position (K) closest to the spark plug (24).

7. The internal-combustion engine (1) according to any one of claims 1 to 3,
wherein the cross-sectional area becomes maximum at a position (K) closest to the central axis (C).

8. The internal-combustion engine (1) according to any one of claims 1 to 7,
wherein the valve seat (25) further comprises a heat radiating fin (50) formed within the channel (40).

9. The internal-combustion engine (1) according to claim 8,
wherein a surface area of the heat radiating fin (50) per unit volume is larger at the second position (B) than at the first position (A).

10. The internal-combustion engine (1) according to claim 8 or 9,
wherein a surface area of the heat radiating fin (50) per unit volume increases as closer to the combustion chamber (30).

11. The internal-combustion engine (1) according to any one of claims 1 to 10,
wherein the channel (40) is layered at least in a partial range (60).

12. The internal-combustion engine (1) according to any one of claims 1 to 11,
wherein a number of the valve seat (25) is plural, and
supply of the cooling medium is controlled independently for each of the plurality of valve seats (25).

13. The internal-combustion engine (1) according to any one of claims 1 to 11,
wherein a number of the valve seat (25) is plural,
the plurality of valve seats (25) include a first valve seat (25) and a second valve seat (25),
the cylinder head (20) further comprises a connection channel (70) connecting between the channel (40) of the first valve seat (25) and the channel (40) of the second valve seat (25), and
the cooling medium introduced to the channel (40) of one of the first valve seat (25) and the second valve seat (25) is supplied through the connection channel (70) to the channel (40) of another of the first valve seat (25) and the second valve seat (25).

14. The internal-combustion engine (1) according to claim 13,
wherein both the first valve seat (25) and the second valve seat (25) are intake valve seats (25i) on an intake side or exhaust valve seats (25e) on an exhaust side.

15. The internal-combustion engine (1) according to claim 13,
wherein the first valve seat (25) is an intake valve seat (25i) on an intake side, and
the second valve seat (25) is an exhaust valve seat (25e) on an exhaust side.

16. The internal-combustion engine (1) according to claim 15,
wherein the cooling medium introduced to the channel (40) of the intake valve seat (25i) is supplied through the connection channel (70) to the channel (40) of the exhaust valve seat (25e).

17. The internal-combustion engine (1) according to claim 15,
wherein when warm-up of the intake side is required, the cooling medium introduced to the channel (40) of the exhaust valve seat (25e) is supplied through the connection channel (70) to the channel (40) of the intake valve seat (25i), and
wherein when warm-up of the intake side is not required, the cooling medium introduced to the channel (40) of the intake valve seat (25i) is supplied through the connection channel (70) to the channel (40) of the exhaust valve seat (25e).
